# EUROPEAN PATENT APPLICATION

(11) **EP 3 392 813 A1**
(43) Date of publication of application: **24.10.2018**
(21) Application number: 16838000.4
(22) Date of filing: 15.12.2016
(51) Int. Cl.: G06Q 10/08, A47F 9/04, G08B 13/24

(54) **SYSTEM AND METHOD FOR AUTOMATICALLY DECOUPLING A SECURITY DEVICE ASSOCIATED WITH A PRODUCT**

(30) Priority: 18.12.2015 ES 201531841
(71) Applicant: Buy Yourself S.L., 08028 Barcelona (ES)
(72) Inventor: DE LAS HERAS VILLALON, Guillermo, 08028 Barcelona (ES); GONZALEZ DEL BARRIO, Jaime, 08028 Barcelona (ES); PEREZ SERNA, Luis Manuel, 08028 Barcelona (ES); SERRANO GOMEZ, Pablo, 08028 Barcelona (ES)
(74) Representative: Isern Patentes y Marcas S.L.
(86) International application number: PCT/ES2016/070894
(87) International publication number: WO 2017/103313

(57) **Abstract**

A system and method for automatically decoupling a security device associated with a product comprising a security device arranged to be coupled to a product comprising a passive RFID element arranged to emit a unique identifier (ID1), passively, and at least one passive communication element arranged to passively communicate another unique identifier (ID2) to a wireless device, a wireless device that scans said identifier communicating said passive element, a central database accessible by said wireless device through a central server including information on the products available to the user and at least the association of the product with said identifiers (ID1, ID2) when said product is coupled to said security device, a means of payment service accessible by said wireless device through the central server and at least one security tower with at least one microprocessor, an RFID antenna and means of communication, arranged for scanning passive RFID elements, wherein said association between said product and said identifiers (ID1, ID2) is removed from said general database when said identifier (ID2) is scanned by said wireless device, said identifier (ID2) being used by said wireless device to consult the general database, through the central server, the information on the product associated to the identifier (ID2), payment of the product being made from said wireless device by accessing the means of payment service and confirming said payment and wherein, as part of said confirmation, said central server, to which the central database is connected, sends a unique identifier (ID5) to the wireless device.

## Description

### Field of the invention

The present invention relates in general to a system and a method for decoupling alarms or security devices that protect consumer products available at points-of-sale.

### Background of the invention

Currently, there are different systems, devices and/or security methods to avoid the unlawful removal of goods or products in the sector involved with the sale of any kind of products or goods, in department stores as well as in electronics, food, and textiles but more specifically in the retail sector or market.

Among these devices we find the conventional hard plastic alarms or security tags, which generally consist of a hard plastic device along with a metal skewer or other similar device that enables to fit the alarm onto a garment or other product such as bottles in a supermarket.

They are used as a security system in retail establishments because when the device is passed through the store's security towers, the alarm goes off warning of possible theft.

They require an external opening device, of which there are two types:
- Mechanical: they open by inserting a small hook through the hole designed for this purpose.
- Magnetic: they open by applying a magnet, which is an electromagnetic field that moves an internal metal part of the tag, allowing it to open.

Although these are security devices that can also act as deterrents since they are visible and they are reusable, on the other hand, they need an external device in order to release the product they are protecting. They require said external opening device, which can be obtained on the Internet, enabling anyone to release the tag without having paid for the product. Nor do these devices allow any way of identifying the product to which they are hooked or coupled. Amongst other things, this prevents the creation of intelligent storage or stocking control systems, identifying specific products in case of theft or reading garment information through mobile devices.

Variations of the previously mentioned conventional hard plastic alarms also exist, the difference being that each alarm contains a passive RFID circuit.

This RFID enables linking the product and the alarm or security device thereby partially solving some of the problems mentioned above, but this type of devices continues to prevent communication with a mobile device, since current mobile telephones do not have RFID readers.

In general, these are small printed circuits on stickers and/or tags, which, in addition to being inserted inside conventional hard plastic alarms, can be hidden inside the product, having the same objective as the previous ones, namely, sounding the alarms of the security towers in case of theft.

This type of device can be deactivated by means of two different mechanisms:
- By burning: the circuit is subjected to a powerful electromagnetic field, which burns it.
- If they are RFID, by deactivation: the store's point-of-sale has an RFID reader/writer and modifies the information contained inside its memory. The security towers are programmed to sound the alarm or not to sound it, depending on the information they read on the RFID tags.

These types of devices generally have a lower unit cost than the other devices described above. Furthermore, if they have RFID communication capability, they share some of the advantages with the previous type related to this section.

On the contrary, these are single-use labels, because they are lodged inside the product and the customer takes them away when leaving the store; thus they are not reusable. Similarly, they do not solve the problem of being able to use them together with mobile devices.

Generally, RFID alarm deactivators are currently being used in order to override the RFID devices mentioned above. These devices act such that when one of the tags approaches the device, the alarm-deactivating device reads the RFID identifier emitted by the tag and consults the database for the information associated with the tag, allowing the tag to be removed from the product if a purchase has been made. This allows store clerks to save time and also enables setting up unattended cash registers where people ring up their own purchases.

On the other hand, although this device enables carrying out unattended sales, customers still need and external device through which they have to pass the tags when making payment for their purchases, so they still have to queue up to use it.

There are solutions such as those set forth in WO2013093133A1, which describes a decoupling device for an NFC security tag applied to a commodity on sale in a commercial establishment; wherein the decoupling device is connectable to a processing device, which is configured to provide an activation signal of the decoupling device in order to decouple the NFC security tag once the payment transaction has been completed, in the event that the correlation between the identification of the NFC security tag read by an NFC identification reading device is affirmative. This document does not suggest the use of the NFC device included in the security tag in order to open the security device; it only indicates authorization for the sale of the product.

Similarly, document EP1716302B1 also describes a system for automatically decoupling a security tag from an item after that item has been sold. The system comprises an RFID reader provided at the point-of-sale, which reads the RFID security tag to identify the item being purchased; a database that communicates with said reader that verifies whether the item which was read is available for sale; a decoupling device that communicates with and is controlled by the database, decoupling device which is controlled in order to decouple said security tag from the item only if the database verifies that said item, which was read, is available for sale; and, a point-of-sale or POS machine, which communicates with the database that provides the identity of the item and the sales information to the POS machine after the security tag has been decoupled from the item.

Therefore, as indicated, these two inventions require a security device, external to the device itself, which is attached to the product in order to be able to release, open and/or deactivate the alarm from the product. Generally, these external systems are usually located at a fixed point such as the cash register or just before the security towers, which prevent the passage of those products with security tags that have not previously been purchased.

On the other hand, document WO2014046760A1 shows a system and a method for security tags in an electronic article surveillance system, which involves carrying out a transaction via POS device, and when said POS receives confirmation, an indication is received to separate the security tag from an item and send a message from the mobile POS device to a peripheral device through short-range communication where said peripheral device has the means for releasing the tag.

And document US2015242842A1 shows a radio frequency tag with an integrated anti-theft device, which allows a user with a mobile device to carry out a secure purchase with an application, where the user uses the camera in the mobile device to read the barcode of a product and the radio frequency tag of the anti-theft device. The user can select the product he wants to purchase, consult the information related to that product, purchase the product and disable the anti-theft device in order to pass through the security towers without setting off the alarm.

Both of the above mentioned documents, although showing a solution based on a mobile device, a POS in the case of the first document, present the problem of both being based exclusively on the availability of a network and more specifically, that store systems have Internet access; thus the service can no longer be provided in the event of connectivity failure.

### Description of the invention

It is necessary to provide an alternative to the state of the art covering the gaps found therein and therefore, unlike existing solutions, the present invention focuses on using an element like the mobile device which a user purchasing a product in a store could carry as an element for deactivating an alarm or decoupling an item physically and/or from a database, without having to use an external device for said process as in existing solutions, but rather through the use of a wireless or mobile device that the customer or user itself would carry, and which could also tolerate possible communication failures of the mobile network to which said mobile device could be connected, or even the impossibility of accessing the Internet, since this invention allows customers to purchase with entire independence by using their own mobile telephones and it works even though there is no Internet connection available in the store.

Specifically, the present invention shows a system and a method for automatically decoupling a security device associated with a product comprising a security device (109) arranged to be coupled to a product comprising a passive RFID element (1021) arranged to emit a unique identifier (ID1), passively, and at least one passive communication element (1022 and/or 1023) arranged to passively communicate another unique identifier (ID2) to a wireless device (101), a wireless device (101) arranged to scan said unique identifier that communicates said passive communication element (1022 and 1023) of said security device (109), a central database (105) accessible by said wireless device (101) through a central server (106) which includes information on the products available to the user and at least the association of said product to said unique identifiers (ID1, ID2) when said product is coupled to said security device (109), a means of payment service accessible by said wireless device (101) through said central server (106) and, at least one security tower (104) with at least one microprocessor, an RFID antenna and means of communication, arranged to scan passive RFID elements (1021), wherein said association between said product and said identifiers (ID1, ID2) of said security device (109) is removed from said general database (105) when said unique identifier (ID2) of said passive communication element (1022 and 1023) is scanned by said wireless device (101), said identifier (ID2) being used by said wireless device (101) to consult said general database (105), through said central server (106), the information on the product associated to said unique identifier (ID2), payment of said product being made from said wireless device (101) by accessing said means of payment service and confirming said payment, and wherein, as part of said confirmation, said central server (106), to which the central database (105) is connected, sends a unique identifier (ID5) to said wireless device (101).

One of the problems solved by the invention is that it does not require an external alarm deactivator, thus, the customer is independent throughout the entire purchasing process, avoiding unnecessary waiting or queues in stores. The system also has a deterrent effect because the alarm tags are visible to the public. Because these devices have an internal opening system and the hardware that enables them to establish communication with a mobile device, such as smartphone and as a result, in general, they have Internet or data access, stores does not need an external opening device of their own.

On the other hand, because it is based on RFID, it enables the scanning of the products with alarm tags by typical store devices, such as security towers, not requiring general modification of the security infrastructure already available in stores but merely a few minor adaptations.

Therefore additional advantages are obtained such as the total elimination of queues at checkout counters, the possibility of cross selling through the customer's smartphone, where he can be shown products or offers in addition to those he is already purchasing.

It also enables identifying who buys what, not only the products the user is purchasing, such as when payment is made with credit or debit cards, but also the rest of products that the user scans, even if he does not purchase them. This data helps carrying out more accurate market research or offering real time personalized advertising.

These devices may or may not be reused depending on the type of security device on which the invention is mounted: circuitry plus hardware, sticker-type tag with more passive-type circuitry, etc.

Another advantage of the invention is that, additionally, in one embodiment, it includes extra security factors such as encrypted communications among the different components of the system.

This invention enables the purchaser to be totally independent when making a purchase, while maintaining specific retail sector security standards. Minimum response time and virtually total availability of service are also guaranteed, unlike previous state of the art, which are based on single, not very reliable, data connection with the server, wherein if connection failure occurred the entire service would fail. To this effect, as described in detail below, a second connection to the network is added through cable and/or 3G/4G in order to increase availability; but even if both the store's entire internet network and the 2G/3G/4G connection with the server are down, purchasers can continue their purchases by using solely their own data network to communicate with the central server, once payment has been accepted, connecting with the security towers via P2P Wi-Fi.

### Brief description of the drawings

The foregoing features and other advantages and characteristics will be more fully understood from the following detailed description of embodiments, referenced to the following drawings, which should be considered by way of illustration and not limitation.

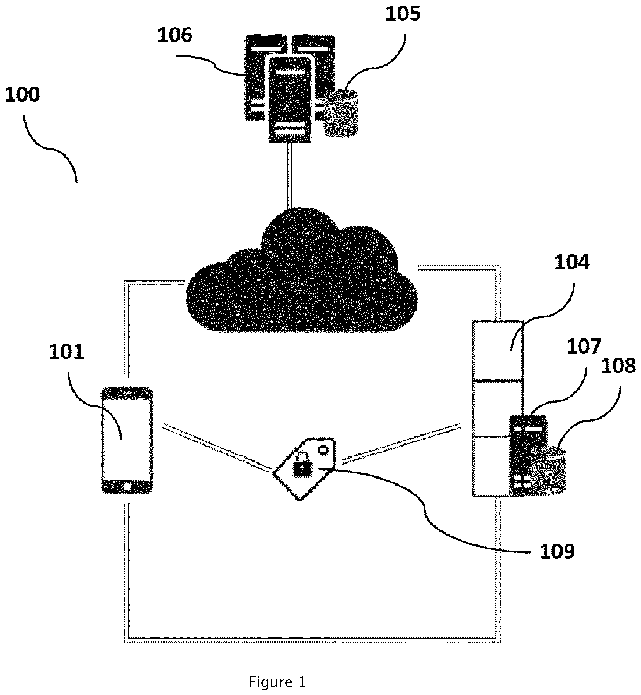

Figure 1. Shows a general outline of the system object of this invention, its elements and the communication relationships between them.

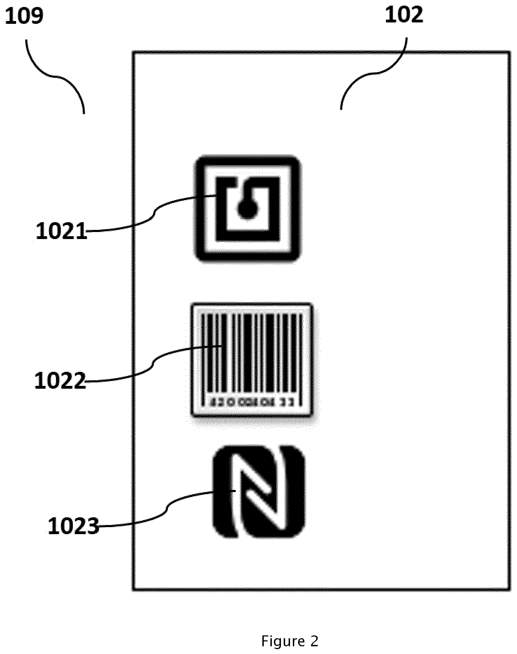

Figure 2. Shows an outline of the elements incorporated by an embodiment of the security device forming part of the system of the invention.

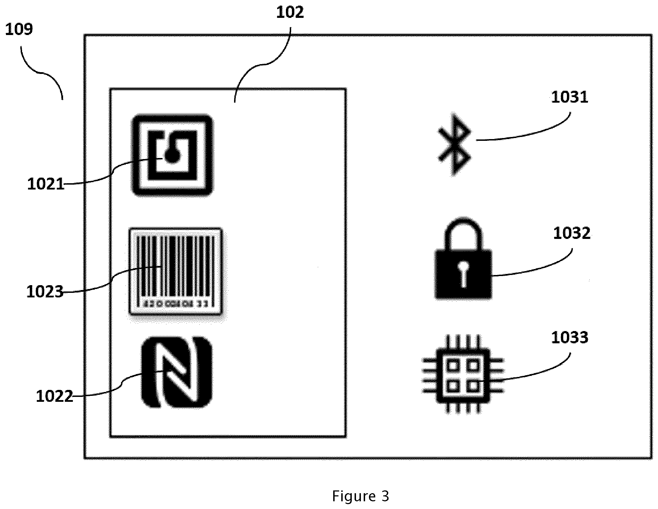

Figure 3. Shows an outline of the additional elements and options incorporated by another embodiment of the security device forming part of the system of the invention.

### Detailed description of the invention

The proposed system enables decoupling and additionally, as an option, automatically removing the security device (109) associated with a product.

In the first embodiment (102) said security device has an RFID (Radio Frequency Identification) component (1021), which has a unique identifier (ID1) that can be read by an RFID reader such as those that may be found in security towers at store check-outs in order to verify whether or not a product has been sold.

In addition, said security device (109) has passive means of communication (1022 and/or 1023) in order to be read or scanned by a wireless device or a smartphone-type mobile device (101) and which emit or transmit another unique identifier (ID2) associated with said security device (109) and stored therein.

These passive means of communication (1022 and/or 1023) may be a passive NFC (Near Field Communication) element (1022), i.e., that takes advantage of the electromagnetic field generated by another active external NFC element in order to transfer its identifier (ID2), or said security device (109) may have a visible unidirectional bar code or a visible QR-type two-dimensional code, which can be scanned and therefore incorporate as information that unique identifier associated with said device (109).

Optionally, you can simultaneously have both types of passive communication elements, NFC (1022) and unidirectional of bidirectional bar code (1023).

Another option or embodiment of the invention, even if said RFID component (1021) and said passive elements (1022 and/or 1023) are available, either through NFC (1022) and/or unidirectional or bidirectional barcode (1023), consists in that said elements (1022 and/or 1023) be physically separated in the product in order to complicate their detection. For example, the RFID (1021) can be sewn inside a garment or hidden inside product packaging.

In another embodiment, and as an option, said security device (109) may contain, in addition to said RFID element (1021) and said element or passive elements (1022 and/or 1023), an active communication element (1031) with wireless devices or smartphone-type mobile devices (101). Said active element (1031) may be either an active NFC element or chip or a BLE (Bluetooth Low Energy) element or chip. Said active element (1031) has a unique identifier (ID3), which allows the mobile device (101) to be connected. Generally, said unique identifier (ID3) corresponds to the identifier necessary for establishing communication by NFC or BLE with said active communication element (1031).

When said security device (109) has an active communication element (1031), said security device (109) also has an internal closing and opening mechanism (1032) actuated by means of electromagnets or similar, arranged to be actuated without using an external alarm deactivating element intended for this purpose, as is usually the case in known solutions, and a microcontroller (1033) arranged to control and execute the logic of the actions to be performed by said security device (109), such as internal opening or closing or issuing the identification of the active element or transferring the information with the mobile device (101) with which it communicates. It also incorporates a battery for powering the active communication element (1031), the closing and opening element (1032) and the microcontroller (1033).

The internal closing and opening element or mechanism (1032) is arranged to be actuated when an instruction is received from the mobile device (101) with which the security device (109) communicates through said active communication element (1031).

Said closing and opening mechanism (1032) generally enables to physically bind the product to be secured with the security device (109), for example by means of a clamp, a skewer through fabrics, the blocking of a box which contains the product, etc., and therefore its actuation unlocks or physically releases the product from the security device.

If said security device (109) is not provided with said closing and opening element (1032), the product may be physically bound by other means, such as, for example, adhering by means of a sticker or by sewing said device to said product.

When a product has an alarm or is secured with this security device (109) it implies that said product is registered in a database (105) and at least the unique identifier of the passive RFID element (1021) (ID1), the unique identifier (ID2) of the passive communication element (1022 and/or 1023) are associated together with the identification of said product with NFC-type (1022) mobile devices (101) or unidirectional or bidirectional codes (1023). In case an NFC-type (1022) passive element (1022 and/or 1023) and another type of unidirectional or bidirectional code (1023) coexist, a unique identifier for each type of passive communication element (ID21 and ID22) will exist.

If said security device (109) further has said active communication element (1031) and therefore has an associated unique identifier (ID3), said identifier (ID3) is also found in said database (105) related to the product.

When a user or customer is interested in a product which is secured with this security device (109), he uses a mobile or wireless device (101), generally a smartphone, for scanning or reading the passive element (1022 and/or 1023) located in said device (109) and thereby obtaining said unique identifier (ID2). If said mobile device (101) has an active NFC connection, it can use said connection to read the identifier (ID2) of said passive NFC element (1022) of the security device (109). If said mobile device (101) does not have an NFC connection, or alternatively, although it may have said connection, it can use the camera of the mobile device (101) to read the identifier (ID2) of the unidirectional or bidirectional code (1023) of the security device (109).

If both types of passive communication elements (1022 and/or 1023) are available in the system, the user may choose to read any of the identifiers of said elements (ID21 or ID22) with the appropriate means of the mobile device (101).

After reading said identifier (ID2, ID21 or ID22) of the passive element (1022 and/or 1023) of the security device (109), the mobile device (101) via its Wi-Fi-type 2G, 3G, 4G, etc., wireless connection, consults with said central server (106) or backend, the product database (105) obtaining information on that product corresponding to the identifier (ID2, ID21 or ID22) read from the passive element (103) of said security device (109), as well as the other identifiers associated with the security device (109).

Said information retrieved from said database (105) may contain, aside from the identification of the product itself, commercial information on the product such as the price, manufacturer, etc.

If the user or customer wants to purchase the product, he may proceed to pay the same from said mobile device (101) that connects to the store's payment service through the central server (106), which service, by way of non-limitation, may be a specific service of the store or an external payment gateway. Upon acceptance of the payment, said service updates said product in the product database (105) and disconnects it from the security device (109) data, among which at least the unique identifier of the RFID element (1021) (ID1) is found, such that if the product passes through the security towers (104) arranged to read the RFID elements, it would confirm that it is a product without an alarm and the corresponding alarm would not go off. If it is a sticker or tag-type device with a printed circuit, the product usually exits the store through the security towers (104) together with said tag or sticker, even if it is disconnected from said alarm at the database level.

In order for said security tower (104) to detect said RFID elements (102), which have a non-modifiable memory and therefore emit a said unique identifier (ID1), and recognize whether or not the associated products have been acquired, said security tower (104) incorporates a microcontroller and a local server (107) with means for connecting to said central server (106) or backend in order to access said product database (105) and consult said unique identifier (ID1) and thus recognize whether or not said product has been purchased.

Therefore, when a purchaser passes a product with these RFID elements (102) like, for example sticker-type elements, the tower (104) because of the range covered by its antennas, will detect the sticker and using its unique identifier (ID1), the microcontroller with its local server (107), will consult the database (105) through the connection with the central server (106), letting the purchase pass if it was made according to said database (105), or otherwise carrying out the corresponding deterrent actions such as sounding an acoustic alarm.

It should be mentioned that the implementation of the security tower element (104) with RFID receiving antennas, the microprocessor with the server (107) and the means of communication, may take on different forms, such as, for example, security towers as is, the location of one or several of these components in the ceiling or in a carpet on the floor, etc.

With the aim of improving the system, another option is that, when the database (105) is updated after a purchase is made, the central server (106) or backend be responsible for notifying the security tower or towers (104) about said update through the means of communication available in the tower (104) with said central server (106). In this case, said security tower (104) includes a local database (108) where it stores said information on purchased products received from the central server (106) and when it has to make a verification upon detecting an RFID identifier (ID1) of a product, it does so directly in said local database (108).

Said means of communication between said security tower (104) and said central server (106) for accessing said central database (105) may be an Ethernet-type connection, a 2G, 3G, 4G mobile connection etc. Thus, said security tower (104) has an Ethernet connection and/or a 2G, 3G, or 4G mobile network connection.

If the security device (109) optionally carries an active element (1031) for communicating with said mobile device (101) and an opening or closing element or mechanism (1032) of the security device (109), said mobile device (101) can establish communication with said security device (109) through said active element (1031) in a transparent way for the user, by using the identifier of the active element (1031) (ID3) retrieved from the database (105).

When said connection is established through said active element (1031) i.e., in a general but not limitative way by active BLE or NFC, said active element (1031) returns a unique identifier (ID4) upon request from said connected mobile device (101) and said identifier (ID4) is sent in the payment request to the payment service.

In this case, once the product has been paid through the payment service and thus the product and the security device have also been disconnected in the database (105), the system communicates the result of the payment to said wireless device (101) together with another unique identifier (ID5).

Then said mobile device (101) is reconnected to said active element used and sends an instruction to said security device through the connection to the active element together with the unique identifier (ID5), which the payment service had returned.

Said security device (109) verifies that said received unique identifier (ID5) corresponds to the one sent in the first connection (ID4), and if so, it executes the instruction and activates the closing and opening element in order to open the device and thereby physically release it from the product to which it was bound.

Typically, the information received by said wireless device (101) of the payment service when said payment has been accepted, the unique identifier (ID5), consists of the identifier that it had sent in the first connection (ID4) encrypted with a private key. In this case, said wireless or mobile device (101) sends said security device (109) said identifier (ID5) in the activation instruction when the second connection with the active element is established and said security device (109) uses a stored public key to verify that it is the same identifier (ID4) that it had sent to the mobile device (101) upon establishing the first connection. If both identifiers match, then the activation instruction is executed on the closing and opening element.

Although generally said unique identifier (ID4) of said active element (1031) is stored in said element, in an embodiment, said unique identifier (ID4) is specifically generated for each connection that is established with said active element (1031). Said generation may be a random generation.

This encryption mechanism of the unique identifier (ID4) and, additionally, the unique generation for each interaction with the active element (1031) of the security device (109) allows including an additional security factor.

Additionally and optionally, all communication between said security device (109) through the active element (1031) is encrypted to include an additional security factor.

Similarly, as an option, all communication between said mobile device (101) and said payment service or between said mobile device (101) and said product database through said central server (106) or backend is encrypted to provide additional security.

Preferably, the implementation of the method in the mobile device (101) is carried out in a mobile application.

In another optional embodiment and as a mechanism or backup, when the security tower (104) has said local database (108) so that the central server (106) or backend to which the general database (105) is connected, and for any reason cannot establish communication between said local server (107) of the security tower (104) and the central server (106) or backend, the central server (106), upon acceptance of the purchase by means of the payment service, sends the result of the payment together with the unique identifier (ID5) to said wireless or mobile device (101), also including an identification so that said mobile device (101) communicates with said security tower (104) and sends it said unique identifier (ID5), such that the tower updates its local database (108), thus allowing the purchased product to exit without sounding the corresponding alarms, preferably in acoustic and visual form, located in the security tower (104) itself.

Communication between said mobile device (101) and said security tower (104) is preferably carried out using a Wi-Fi P2P protocol. And optionally, for this embodiment, the unique identifier (ID5), in addition to being encrypted with a private key from the central server (106) or backend, as already discussed, may incorporate a timestamp in the information to include greater security rating. Therefore, said security tower (104) has a Wi-Fi connection.

As can be seen, apart from the complete independence of the purchaser, and his not requiring any external element to deactivate an alarm, in case the business establishment is left without connection to the Internet for some reason, the purchaser can continue making his purchases because of the Wi-Fi P2P connection between said mobile device (101) of the user or purchaser with the towers (104) and the local database (108) itself, installed in said towers (104).

For such a process to function, the security tower (104) has the corresponding certificates from the corresponding certifying authorities (CA) installed from its initial installation, such that when the tower (104) is connected to the central server (106), it can safely query said central server (106) on the public keys it will then use to decrypt said identifier (ID5) which also contains the timestamp.

Generally, there is only one active key, but when it has to be changed, the central server (106) connects to each of the towers (104) and notifies, by means of push mechanisms or similar, that a new key must be requested. Said process can be carried out regularly in order to increase the security rating as follows:
1. The central server (106) after having carried out a number of transactions or after a few seconds launches a renewal process.
2. The central server (106) creates the new key, but keeps on using the previous key. The central server (106) returns the two keys, the one that was active up until now and the new key, marking the new key as active.
3. The central server (106) notifies the towers (104) that they must request the new key.
4. For several seconds, a grace period until all the towers have the new key, the central server (106) encrypts with the old key, after which it encrypts with the new key.
5. For several seconds, the towers verify with the two keys.

As can be seen, when said security devices (109) incorporate said opening and closing element (1032) and they can be physically removed from the product they are protecting, they can be reused for other products, once released. In case of those adhered to the product or when using other means of fastening thereby not being immediately removable from the product, they are normally not reusable.

Therefore, in the case of the security devices (109) that are reusable, optionally, although the product is disconnected from the device on the central database (105) level once the payment is confirmed, it can still generate an alarm when the device passes through the security tower (104) and said RFID passive element is read. This way, the erroneous exit of said devices can be controlled.

As can be deduced, the system, within the operating method, requires initial setting up or placing alarms on the products wherein each of them is associated with the corresponding security elements, i.e., RFID element (1021), passive communication element (1022 and/or1023) and their unique identifiers and updating the general database (105). Said procedure can be performed by connecting directly to the central server (106) in order to carry out the updates during the manufacturing process, but optionally, with the support of a mobile device (101) for the salesclerks of the business establishment, where they can read the RFID (1021) and passive elements (1022 and/or 1023) and establish the relationship with the product, all of which with communication between said mobile device (101) and the central server (106).

In an embodiment, each time said database (105) is upgraded or updated, the central server (106) sends the information to the security towers (104) in order to store said information in its local database (108) and, thus, it can thereafter identify the provisioned products in case they leave the store without having been bought.

As can be seen, the purchasing process is always the same from the purchaser's point of view, regardless of the type of security element or tag used to place an alarm on the product, i.e., in a general and non-limitative way, the NFC-type or barcode or two-dimensional garment or product alarm or tag is scanned with a user mobile device, usually through a mobile application or APP; said product is purchased using said mobile application through the payment gateway and if the alarm includes a closing and opening element, it is removed from said product, which is then ready to leave the establishment in a secure way.

## Claims

1. A system (100) for automatically decoupling a security device associated with a product **characterized in that** it comprises
- a security device (109) arranged to be coupled to a product comprising a passive RFID element (1021) arranged to emit a unique identifier (ID1), passively, and at least one passive communication element (1022 and/or 1023) arranged to passively communicate another unique identifier (ID2) to a wireless device (101),
- a wireless device (101) arranged to scan said unique identifier that communicates said passive communication element (1022 and/or 1023) of said security device (109),
- a central database (105) accessible by said wireless device (101) through a central server (106) including information on the products available to the user and at least the association of said product with said unique identifiers (ID1, ID2) when said product is coupled to said security device (109),
- a means of payment service accessible by said wireless device (101) through said central server (106) and
- at least one security tower (104) with at least one microprocessor, an RFID antenna and means of communication, arranged to scan passive RFID elements (1021),
wherein said association between said product and said identifiers (ID1, ID2) of said security device (109) is removed from said general database (105) when said unique identifier (ID2) of said passive communication element (1022 and/or 1023) is scanned by said wireless device (101), said identifier (ID2) being used by said wireless device (101) to consult said general database (105), through said central server (106), the information on the product associated to said unique identifier (ID2), payment of said product being made from said wireless device (101) by accessing said means of payment service and confirming said payment and wherein, as part of said confirmation, said central server (106) to which the central database (105) is connected sends a unique identifier (ID5) to said wireless device (101).

2. The system (100) for automatically decoupling a security device (109) associated with a product according to claim 1, **characterized in that** said verification by said security tower (104) consists in consulting a local database (108) located in said security tower (104) wherein the information of said local database (108) is updated by said central server (106) each time there is a modification in the central database (105) connected to said central server (106) and wherein said consultation of the local database (108) is consulted if said product has been purchased, using the scanned identifier (ID1) for the consultation.

3. The system (100) for automatically decoupling a security device (109) associated with a product according to claim 2, **characterized in that** if there is a communication gap between said security tower (104) and said central server (106) for updating the local database (108) when said central database (105) connected to said central server (106) is modified, said wireless device (101) communicates with the local server (107) of said tower (104), sending it the unique identifier (ID5) received in the confirmation of said purchase of said product, and said local server (107) updating the local database (108) of said security tower (104).

4. The system (100) for automatically decoupling a security device (109) associated with a product according to claim 1, **characterized in that** said security tower (104), when detecting the identifier (ID1) of an RFID element (102), verifies whether or not the product associated to said identifier (ID1) has been paid, and if it has not been paid, it generates an alarm through visual and/or acoustic means.

5. The system (100) for automatically decoupling a security device (109) associated with a product according to claim 4 **characterized in that** said verification by said security tower (104) consists in consulting said general database (105) through said central server (106) to find out whether said product has been purchased, using the scanned identifier (ID1) for the consultation.

6. The system (100) for automatically decoupling a security device (109) associated with a product according to claim 5, **characterized in that** said unique identifier (ID5) includes a timestamp used by said tower as a security check.

7. The system (100) for automatically decoupling a security device (109) associated with a product according to claim 1, **characterized in that** said security device (109) further comprises
- an active communication element (1031) arranged to communicate with said wireless device (101),
- a closing and opening element (1032) arranged to be actuated when an instruction is received from said wireless device (101),
- a battery arranged to supply power to said active communication element (1031) and said closing and opening element (1032),
- a microcontroller (1033) arranged to control and execute the logic behind the actions to be carried out by said security device (109),
wherein said central database (105) accessible by said wireless device (101) through said central server (106) further includes a unique identifier (ID3) associated with said active communication element (1031), wherein said unique identifier (ID3) is also returned in the product information when said wireless device (101) consults said central database (105), wherein when said payment is to be made through said means of payment service, said wireless device (101) establishes a first communication with said active communication element (1031) of said security element (109), using said unique identifier (ID3) it consults said active communication element (1031) for a unique identifier (ID4) in order to identify said payment, said wireless device (101) sends said unique identifier (ID4) in the payment request made to said means of payment service, wherein when said service confirms said payment to said wireless device (101), and a unique identifier (ID5) is returned in said confirmation, wherein said wireless device (101) establishes a second communication with said security device (109) through said active communication element (1031), sending an instruction through said connection in which said unique identifier (ID5) is contained, wherein said security device (109) verifies that said received identifier (ID5) equals the identifier (ID4) which was sent to said wireless device (101) in the first connection, and if they match, the instruction is executed and said closing and opening element is activated decoupling said security device (109) from said product.

8. The system (100) for automatically decoupling a security device (109) associated with a product according to any of claims 1, **characterized in that** said passive element (1022 and 1023) of said security device (109) is an NFC (Near Field Communication) (1022), a unidirectional barcode or a two-dimensional QR barcode (1023).

9. The system (100) for automatically decoupling a security device (109) associated with a product according to any of claims 1, **characterized in that** said device (109) comprises two passive elements (1022 and1023), an NFC (1022) and a unidirectional barcode or a two-dimensional QR barcode and wherein said central database (105) includes a unique identifier associated with said passive element (1022) NFC (ID21) and a unique identifier associated with a unidirectional barcode or a two-dimensional QR barcode (1023) (ID22).

10. The system (100) for automatically decoupling a security device (109) associated with a product according to any of claims 1, **characterized in that** said means of payment service is a store specific service or is a service provided through an external payment gateway.

11. The system (100) for automatically decoupling a security device (109) associated with a product according to claim 7, **characterized in that** said active communication element (1031) is an active NFC chip or a BLE (Bluetooth Low Energy) chip.

12. The system (100) for automatically decoupling a security device (109) associated with a product according to claim 7, **characterized in that** said closing and opening element (1032) of said security device (109) works by means of electromagnets.

13. The system (100) for automatically decoupling a security device (109) associated with a product according to claim 7, **characterized in that** said wireless device (101) is a mobile device with at least one camera and/or means for scanning unidirectional barcodes and/or two-dimensional barcodes and/or an active NFC or BLE element and a wireless interface of at least one type of Wi-Fi: 2G, 3G, or 4G.

14. The system (100) for automatically decoupling a security device (109) associated with a product according to claim 1, **characterized in that** the means of communication of said security tower (104) is at least one of the following types of Wi-Fi: 2G, 3G, or 4G.

15. A method for automatically decoupling a security device (109) associated with a product, **characterized in that** it comprises the following steps:
- scanning with said wireless device (101) the unique identifier (ID2, ID21, ID22) of at least one passive element (1022 and/or1023) of said security device (109),
- consulting said central database (105) from said wireless device (101) through said central server (106) the product information associated with said obtained unique identifier (ID2),
- requesting payment of said product from said wireless device (101) to said means of payment service through said central server (106),
- once the payment is confirmed, removing the association between said product and said identifiers (ID2, ID21 and/or ID22) from said central database (105), and
- sending a unique identifier (ID5) through said central server (106) to the wireless device (101).

16. The method for automatically decoupling a security device (109) associated with a product according to claim 15, **characterized in that** said security tower (104), when scanning the identifier (ID1) of an RFID element (1021) of a product, verifies whether or not the product associated to said identifier (ID1) has been paid and if it has not been paid it generates an alarm.

17. The method for automatically decoupling a security device (109) associated with a product according to claim 15, **characterized in that** said verification by said security tower (104) consists in consulting said central database (105) through said central server (106) on whether said product has been purchased, using the scanned identifier (ID1) for the consultation.

18. The method for automatically decoupling a security device (109) associated with a product according to claim 16, **characterized in that** said verification by said security tower (104) consists in consulting said local database (108) of said security tower (104) wherein the information of said local database (108) has been updated by said central server (106) each time a modification takes place in the central database (105) connected to said central server (106) and wherein said consultation of the local database (108) queries whether the product has been purchased, using the scanned identifier (ID1) for the consultation.

19. The method for automatically decoupling a security device (109) associated with a product according to claim 18, **characterized in that** if there is a communication gap between said security tower (104) and said central server (106) in order to update the local database (108) when said central database (105) is modified, said wireless device (101) sends the unique identifier (ID5) received in the confirmation of said purchase of said product to the local server (107) of said security tower (104) and said local server (107) updates the local database (108).

20. The method for automatically decoupling a security device (109) associated with a product according to claim 17, **characterized in that** the information returned in said consultation to said central database (105) from said wireless device (101) includes a unique identifier (ID3), **in that** said unique identifier (ID3) establishes a first connection with the active connection element (1031) of said security device (109) **in that** said element is consulted for a unique identifier (ID4), **in that** said unique identifier (ID4) is sent from said wireless device (101) in said request for payment of the product to the means of payment service, **in that** said means of payment service, when confirming the payment, returns another unique identifier (ID5) to said wireless device (101), **in that** said wireless device (101) establishes a second connection with said active connection element (1031) of said security device (109) and sends an activation instruction of said closing and opening element through said connection together with said identifier (ID5) and wherein said security device (109) verifies whether said unique identifier (ID4) returned in the first connection of the wireless device (101) and said unique identifier (ID5) sent in said second connection match, in which case it executes the activation instruction of said closing and opening device, said security device (109) being decoupled from said product.

21. The method for automatically decoupling a security device (109) associated with a product according to claim 15, **characterized in that** said unique identifier (ID5), sent to the wireless device (101) when said payment is confirmed, is encrypted with a private key.

22. The method for automatically decoupling a security device (109) associated with a product according to claim 15, **characterized in that** said unique identifier (ID5), returned by said service, incorporates a timestamp.

23. The method for automatically decoupling a security device (109) associated with a product according to claim 19, **characterized in that** said unique identifier (ID5) is decrypted with a public key by said security tower (104) when it receives it, prior to carrying out the comparison in the local database (108).

24. The method for automatically decoupling a security device (109) associated with a product according to claim 20, **characterized in that** said unique identifier (ID5) is decrypted with a public key by said security device (109) when it receives it, prior to comparing both identifiers (ID4 and ID5).

25. The method for automatically decoupling a security device (109) associated with a product according to claim 24, **characterized in that** said public key stored in said security tower (104), which enables said unique identifier (ID5) to be decrypted, is updated when said central server (106) sends a notification of change to said tower (104) and said tower (104) requests the new public key from said central server (106).

26. The method for automatically decoupling a security device (109) associated with a product according to claim 25, **characterized in that** said updating is carried out regularly after a given number of transactions or purchases have been made in the central server (106) or after a specific number of seconds.

27. The method for automatically decoupling a security device (109) associated with a product according to claim 20, **characterized in that** said unique identifier of said active communication element (1031) (ID4) is generated each time a communication is established with said active communication element (1031).

28. The method for automatically decoupling a security device (109) associated with a product according to claim 19, **characterized in that** the communication between said security device (109) through said active element (1031) is encrypted.

29. The method for automatically decoupling a security device (109) associated with a product according to claim 20, **characterized in that** the communication between said security device (109) with said central product database (105) and/or said means of payment service is encrypted.
